# EUROPÄISCHE PATENTSCHRIFT

(11) **EP 0 853 556 B1**
(45) Veröffentlichungstag und Bekanntmachung des Hinweises auf die Patenterteilung: **14.11.2001**
(21) Anmeldenummer: 96932585.1
(22) Anmeldetag: 21.09.1996
(51) Int. Cl.: B60J 10/04, B60J 10/00, B60J 10/06

(54) **DICHTUNGSANORDNUNG FÜR KRAFTFAHRZEUGE**
MOTOR VEHICLE SEALING ARRANGEMENT
DISPOSITIF D'ETANCHEITE POUR VEHICULE A MOTEUR

(30) Priorität: 30.09.1995 DE 29515597 U
(43) Veröffentlichungstag der Anmeldung: 22.07.1998
(73) Patentinhaber: METEOR GUMMIWERKE K.H. BÄDJE GMBH & CO., 31167 Bockenem (DE)
(72) Erfinder: WARNECKE, Hans-Jürgen, D-38642 Goslar (DE)
(74) Vertreter: Kosel, Peter, Dipl.-Ing.
(86) Internationale Anmeldenummer: EP9604139
(87) Internationale Veröffentlichungsnummer: WO9712775

(56) Entgegenhaltungen:
- EP-A- 0 021 989
- EP-A- 0 193 133
- EP-A- 0 627 341
- DE-A- 4 202 475
- DE-A- 4 310 754
- DE-C- 3 335 150
- DE-C- 3 442 653
- US-A- 4 442 156
- US-A- 4 897 298
- US-A- 5 265 377

## Beschreibung

Die Erfindung betrifft eine Dichtungsanordnung nach dem Oberbegriff des Anspruchs 1.

Bei einer bekannten Dichtungsanordnung dieser Art (EP 0 193 133 A2) sind die Vertiefungen Bestandteil einer z.B. durch Sandstrahlen erzeugten Rauhigkeitsmusterung in Mikrogrößenordnung.

Aus der US 5 265 377 A ist es an sich bekannt, in der Basis eines Scheibendichtungsprofils einen Streifen aus thermoplastischem Material zu befestigen. Der Streifen ist auf einer der Scheibe zugewandten Seite abwechselnd mit Nuten und Rippen versehen, die parallel zueinander und schräg zur Längserstreckung des Streifens verlaufen. Der Abstand zwischen benachbarten Rippen ist so groß, daß Schmutz - oder Staubpartikel in den Nuten entlang in seitliche Abführrinnen des Profils gefördert werden können. Dies Profil soll also vor allem selbstreinigende Eigenschaften haben und die Scheibe vor dem Zerkratzen schützen.

Aus der EP 0 627 341 A1 ist ein Kunststoffprofil an sich bekannt, das an seiner Dichtseite mit einer Gleitauflage versehen ist. Die Gleitauflage weist wenigstens eine in Längsrichtung des Profils verlaufende, koextrudierte Dichtungsrippe auf. Jede Dichtungsrippe besteht aus thermoplastischem Material, das härter als der Kunststoff des Profils ist.

Bei anderen bekannten Dichtungsanordnungen (DE 34 05 973 A1 und DE 35 06 410 A1) dient ein Belagstreifen dazu, die Reibung zwischen einer Fensterscheibe und der Dichtungsanordnung herabzusetzen und damit die relative Gleitfähigkeit zu erhöhen. Die der Fensterscheibe zugewandte Seite des Belagstreifens ist eben und glatt.

Es ist auch bekannt, zur Erhöhung der Gleitfähigkeit ein Polyamidpulver auf das Dichtungsprofil aufzusintern und dadurch eine glattgeschmolzene, besonders reibungsarme Oberfläche eines Belagstreifens zu erzeugen.

Ferner ist bekannt, auf das Dichtungsprofil einen Belagstreifen mit Beflockung aufzubringen, um Feuchtigkeit und Fremdkörper von einer Fensterscheibe abzubürsten.

Insbesondere bei rahmenlosen Fensterscheiben, wie sie bei Coupés oder Kabrioletts Verwendung finden, haben diese bekannten Macharten der Belagstreifen jedoch zu Unzuträglichkeiten geführt. Vor allem treten in bestimmten Betriebszuständen, vorzugsweise bei nasser Fensterscheibe, Quietsch- oder Brummgeräusche auf, wenn die Fensterscheibe relativ zu der Dichtungsanordnung bewegt wird. Störende Geräusche entstehen vor allem bei der immer mehr zunehmenden motorischen Bewegung der Fensterscheibe.

Knarrende und/oder Quietschgeräusche treten auch auf, wenn einerseits bei einer geschlossenen Tür eines Kraftfahrzeugs Relativbewegungen zwischen der Tür und der Karosserie auftreten, und wenn andererseits ein Dachelement, insbesondere ein Schiebedach oder ein Ausstelldach, eines Kraftfahrzeugs geöffnet oder geschlossen wird.

Der Erfindung liegt die Aufgabe zugrunde, Geräusche zu vermindern oder ganz zu unterdrücken, die durch die Bewegung der Fensterscheibe relativ zu der Dichtungsanordnung oder eines Verschlußorgans des Kraftfahrzeugs relativ zu der zugehörigen Karosserieöffnung entstehen können.

Diese Aufgabe ist durch die Merkmale des Anspruchs 1 gelöst. Die Riefen führen zu einer wirksamen Geräuschunterdrückung, und es wird verhindert, daß in dem System aus Fensterscheibe und Dichtungsanordnung oder in dem System aus Verschlußorgan und Karosserieöffnung bei einer Relativbewegung Schwingungen angefacht werden, die zu Geräuschen, insbesondere Quietsch- und Brummgeräuschen, führen. Es wird angenommen, daß solche Geräusche bisher aus einem ständigen Wechsel zwischen Haftund Gleitreibung entstanden sind (slip-stick-Effekt). Durch die Riefen werden dagegen gleichmäßige und gleichbleibende Reibungseigenschaften zwischen der Fensterscheibe und der Dichtungsanordnung oder zwischen dem Verschlußorgan und der Karosserieöffnung unter allen Betriebsbedingungen erzwungen. Dies führt zu deutlicher Verringerung, meist sogar zu völliger Unterdrückung von Geräuschen, insbesondere Quietschund Brummgeräuschen, aufgrund der Relativbewegungen, und dies unter allen praktischen Temperatur- und Feuchtebedingungen. Bei einem Dachelement als Verschlußorgan treten unerwünschte Geräusche zwischen dem Dachelement und der zugehörigen Öffnung im Dach des Kraftfahrzeugs weniger dann auf, wenn das Dachelement verschlossen ist, als dann, wenn das Dachelement geöffnet wird oder in bestimmten Stellungen geöffnet ist. Bei den letzteren Stellungen handelt es sich um solche, bei denen das Dichtungsprofil noch in Berührung mit der Dichtfläche steht. Auch in diesen Fällen lassen sich diese Geräusche, insbesondere Quietschund Knarrgeräusche, wirksam verringern oder gar vermeiden. Das Dachelement kann aus lackiertem Blech, aus Glas oder aus am Rand mit Kunststoff, z.B. PU, umspritztem Glas bestehen. Die Riefen lassen sich einfach und gut kontrollierbar herstellen. Das hochmolekulare Polyethylen ergibt eine wirksame Geräuschunterdrückung. Das Polyethylen ist vorzugsweise geschält und kann z.B. mit einer Dicke von 0,2 mm als Belagstreifen eingesetzt werden.

Die Riefen gemäß Anspruch 2 können z.B. von einigen mm bis zu einigen cm lang sein.

Die Richtung und Anordnung der Riefen gemäß einem der Ansprüche 3 bis 5 wird je nach den vorherrschenden Betriebsbedingungen optimal gewählt.

Die Fasern gemäß Anspruch 6 können z.B. während der Herstellung der Riefen aus demjenigen Material geschaffen werden, das aus den Vertiefungen der Riefen entfernt wird. Die Fasern können z.B. einige mm lang und sehr dünn und fein sein.

Diese und weitere Merkmale und Vorteile der Erfindung werden nachfolgend anhand der in den Zeichnungen dargestellten Ausführungsbeispiele der Erfindung näher erläutert. Es zeigt:
Fig. 1 schematisch die Außenansicht einer Tür eines Coupés,
Fig. 2 die Schnittansicht nach Linie II-II in Fig. 1 in vergrößerter Darstellung,
Fig. 3 die Schnittansicht gemäß Fig. 2 bei versenkter Fensterscheibe,
Fig. 4 die Schnittansicht nach Linie IV-IV in Fig. 1 in vergrößerter Darstellung,
Fig. 5 die Schnittansicht nach Linie V-V in Fig. 1 in vergrößerter Darstellung,
Fig. 6 bis 8 jeweils die Draufsicht auf einen Belagstreifen mit unterschiedlich orientierten Riefen,
Fig. 9 die Seitenansicht eines Kraftfahrzeugs mit entlang einer Türöffnung der Karosserie angebautem Dichtungsprofil,
Fig. 10 das gemäß Fig. 9 verwendete Dichtungsprofil in vergrößerter Darstellung,
Fig. 11 die Schnittansicht gemäß Linie XI-XI in Fig. 10 in wiederum vergrößerter Darstellung,
Fig. 12 in schematischer Darstellung ein Schiebedach,
Fig. 13 das Schiebedach gemäß Fig. 12 in anderen Betriebsstellungen und
Fig. 14 ein Ausstelldach eines Kraftfahrzeugs in schematischer Darstellung.

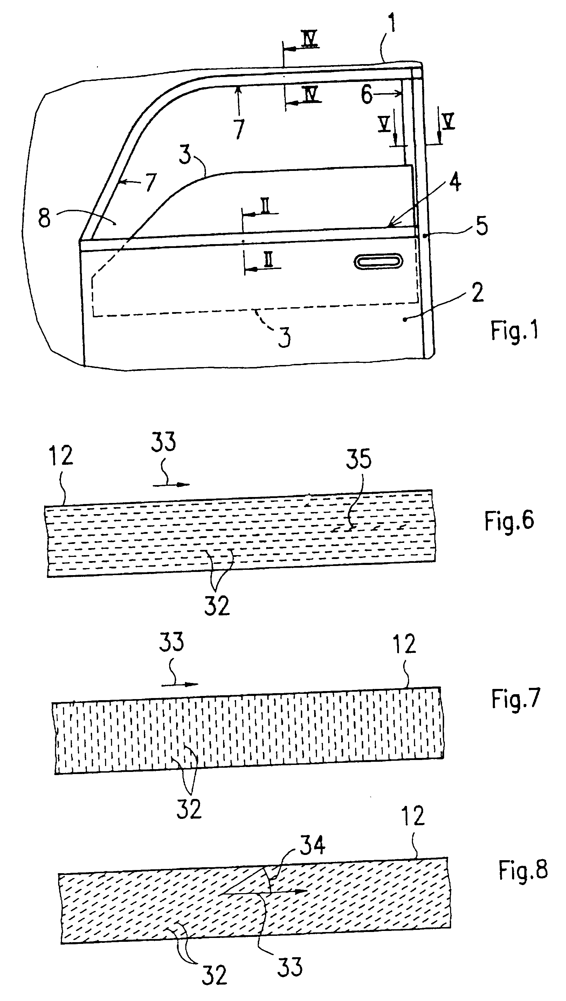

In Fig. 1 sind ein Türrahmen 1 und eine Tür 2 eines Coupés gezeigt. In der Tür 2 ist eine rahmenlose Fensterscheibe 3 durch an sich bekannte manuelle oder motorische Mittel heb- und senkbar in einem Fensterschacht angeordnet. Die Abdichtung des Fensterschachts übernimmt eine am oberen Rand der Tür 2 angebrachte Dichtungsanordnung 4. Entlang der B-Säule 5 des Coupés wird bei geschlossener Tür 2 die zumindest teilweise angehobene Fensterscheibe 3 durch eine Dichtungsanordnung 6 abgedichtet. Wenn bei geschlossener Tür die Fensterscheibe 3 ganz hochgefahren wird, sorgt eine Dichtungsanordnung 7 entlang der oberen Begrenzung des Türrahmens 1 in Fig. 1 bis nach links unten in das sogenannte Spiegeldreieck 8 für die erforderliche Abdichtung und Halterung der Fensterscheibe 3.

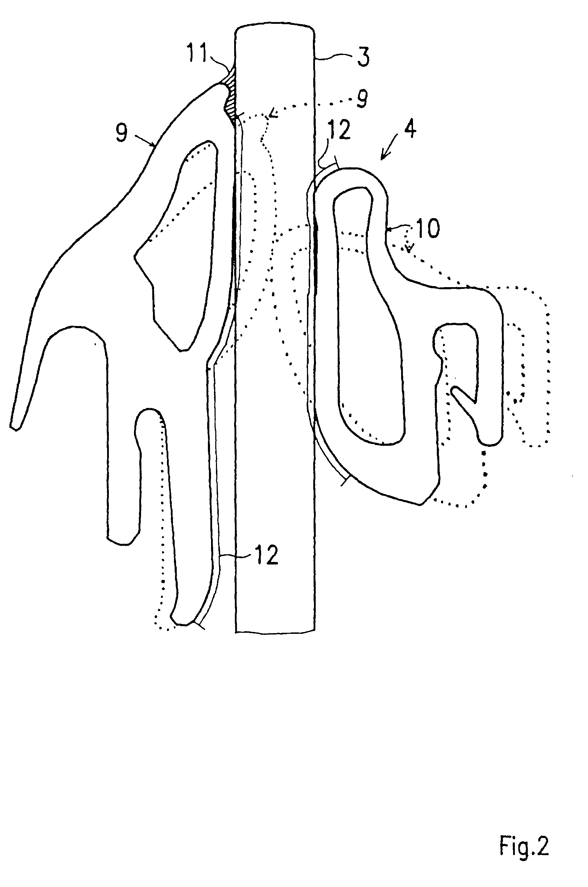

Fig. 2 verdeutlicht, daß die Dichtungsanordnung 4 zu jeder Seite der Fensterscheibe 3 ein Dichtungsprofil 9 und 10 aufweist. Die Dichtungsprofile 9, 10 bestehen aus an sich bekannten, geeigneten Elastomeren und sind in ebenfalls an sich bekannter Weise an der Tür 2 festgelegt.

Das auf der Außenseite der Tür 2 (Fig. 1) liegende Dichtungsprofil 9 ist oben mit einer an sich bekannten Beflockung 11 und, an die Beflockung 11 nach unten hin anschließend, mit einem Belagstreifen 12 versehen. Der Belagstreifen 12 ist z.B. nur 0,2 mm dick und deshalb in Fig. 2 nur schematisch und übertrieben dick dargestellt. Der Belagstreifen 12 haftet fest an dem Dichtungsprofil 9 und ist auf seiner der Fensterscheibe 3 zugewandten Seite mit Riefen 32 (Fig. 6 bis 8) versehen.

Das Dichtungsprofil 10 trägt fensterseitig ebenfalls einen Belagstreifen 12, der auf seiner der Fensterscheibe 3 zugewandten Seite mit Riefen 32 (Fig. 6 bis 8) versehen ist.

Fig. 2 zeigt den Zustand, in dem die Fensterscheibe 3 nach oben hin aus der Dichtungsanordnung 4 ausgefahren ist, also unter maximaler Andrückkraft an den Dichtungsprofilen 9, 10 anliegt. Zusätzlich sind in Fig. 2 die Dichtungsprofile 9, 10 mit unterbrochenen Linien in ihrer voll entspannten Ausgangsstellung gezeigt.

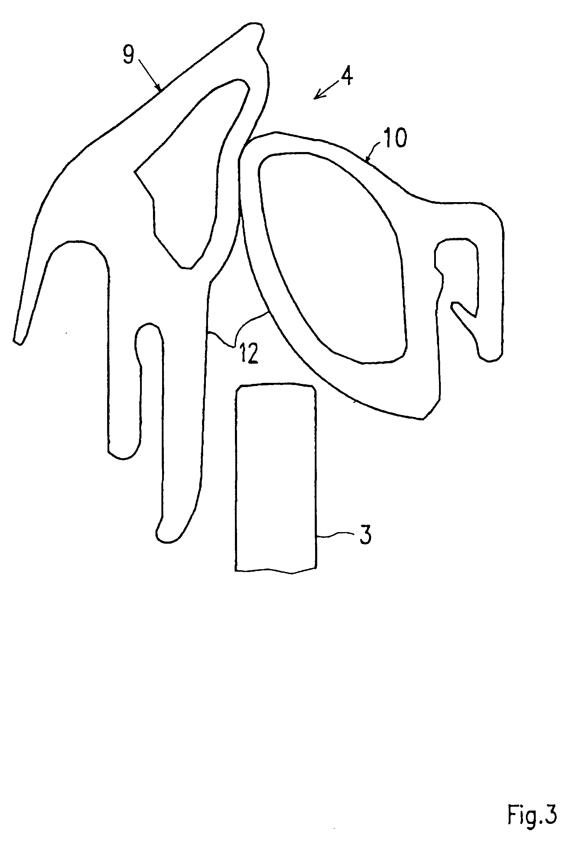

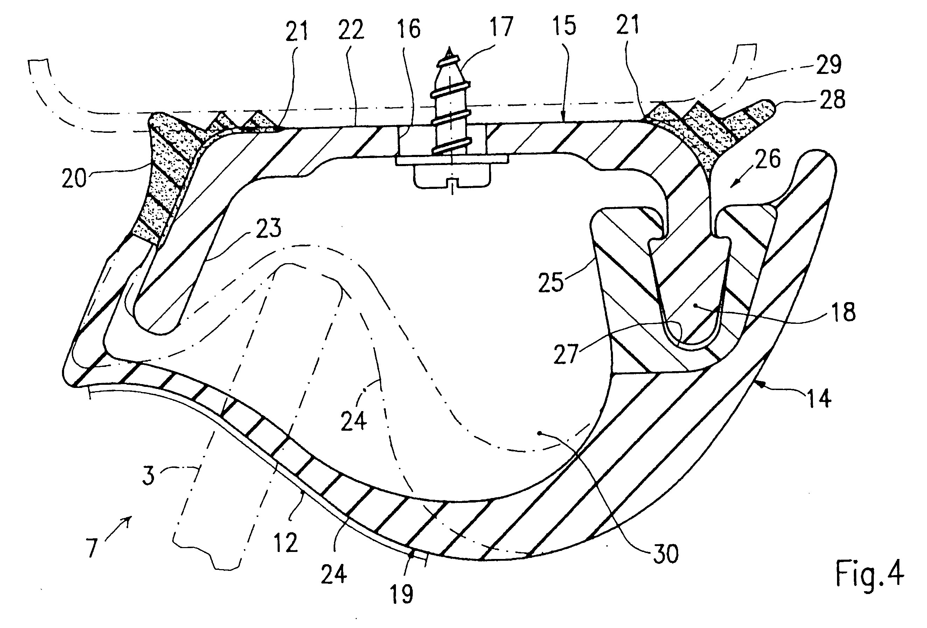

Fig. 3 verdeutlicht denjenigen Betriebszustand der Dichtungsanordnung 4, in welchem die Fensterscheibe 3 unter die Dichtungsanordnung 4 abgesenkt ist. In diesem Zustand liegen die Dichtungsprofile 9, 10 unter einer gewissen Vorspannung aneinander an. Die Vorspannung reicht aus, um den Fensterschacht der Tür 2 (Fig. 1) auch dann abzudichten, wenn die Fensterscheibe 3 unter die Dichtungsanordnung 4 eingetaucht ist. Fig. 4 verdeutlicht Einzelheiten der Dichtungsanordnung 7. Es handelt sich hierbei um ein Verbundprofil 14, das einen im wesentlichen mit U-förmiger Querschnittsfläche ausgebildeten Profilstrang 15 aus thermoplastischem Kunststoff aufweist. Der Profilstrang 15 ist mit mehreren, in Längsrichtung im Abstand voneinander angeordneten Montageöffnungen 16 versehen, die jeweils allseitig Spiel zu einer Blechschraube 17 aufweisen. So kann das Verbundprofil 14 bei der Montage in Längs- und Querrichtung in Grenzen relativ zu den Blechschrauben 17 verschoben werden, bis die optimale Position des Verbundprofils 14 erreicht ist. Dann werden die Blechschrauben 17 festgezogen.

Ein Längsende des Profilstrangs 15 ist als erstes Kupplungselement 18 geformt. An den Profilstrang 15 ist an seine dem ersten Kupplungselement 18 gegenüberliegende Längsseite ein Deckprofilstrang 19 anvulkanisiert. Der Deckprofilstrang 19 weist einen zusätzlichen Profilstrang 20 aus Moosgummi auf, der über ein Kupplungsmaterial 21 an eine Basis 22 und einen Schenkel 23 des Profilstrangs 15 anvulkanisiert ist. Bestandteil des Deckprofilstrangs 19 ist auch ein den Profilstrang 15 überdeckender weiterer Profilstrang 24 aus Weichgummi, der mit einem Längsende an den zusätzlichen Profilstrang 20 und mit seinem anderen Längsende an einen Kupplungsprofilstrang 25 anvulkanisiert ist. Der Kupplungsprofilstrang 25 besteht aus einem thermoplastischen Kunststoff und weist ein mit dem ersten Kupplungselement 18 einen Schnappverschluß 26 bildendes zweites Kupplungselement 27 auf. An die dem zusätzlichen Profilstrang 20 gegenüberliegende Seite des Profilstrangs 15 ist ein Dichtprofilstrang 28 aus Moosgummi über das Kupplungsmaterial 21 anvulkanisiert.

In Fig. 4 ist strichpunktiert oben ein Karosserieblech 29 angedeutet, an welches das Verbundprofil 14 zu montieren ist. Dabei werden die gezackten Teile der Profilstränge 20, 28 dichtend an das Karosserieblech 29 angepreßt und entsprechend deformiert. Bis zu dem vorerwähnten Festziehen der Blechschrauben 17 ist der Schnappverschluß 26 gelöst und der weitere Profilstrang 24 nach unten hin aus dem Weg des Schraubendrehers geklappt. Nach dem Festziehen der Blechschrauben 17 wird der weitere Profilstrang 24 mit dem Kupplungsprofilstrang 25 nach oben geklappt und der Schnappverschluß 26 geschlossen. Dadurch entsteht ein Hohlraum 30, in den hinein die Fensterscheibe 3 den weiteren Profilstrang 24 beim Hochfahren der Fensterscheibe 3 deformieren kann, wie dies in Fig. 4 strichpunktiert angedeutet ist.

Der weitere Profilstrang 24 ist auf seinem mit der Fensterscheibe 3 in gleitende Berührung tretenden Bereich mit einem Belagstreifen 12 versehen, der wiederum übertrieben dick dargestellt ist. Auch dieser Belagstreifen 12 ist auf seiner der Fensterscheibe 3 zugewandten Seite mit den Riefen 32 (Fig. 6 bis 8) versehen.

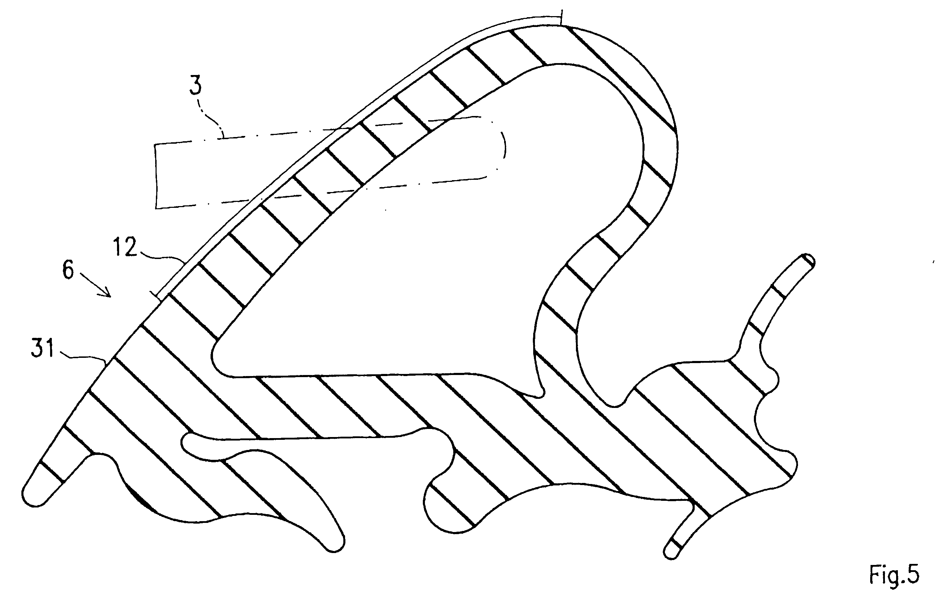

Fig. 5 verdeutlicht die Dichtungsanordnung 6. Diese besteht aus einem Dichtungsprofil 31 aus Weichgummi, das in an sich bekannter Weise in Schienen der B-Säule 5 gehalten ist.

Auch das Dichtungsprofil 31 trägt in einem mit der Fensterscheibe 3 in gleitende Berührung tretenden Bereich einen Belagstreifen 12, der auch in Fig. 5 wieder übertrieben dick dargestellt ist. Der Belagstreifen 12 ist auf seiner der Fensterscheibe 3 zugewandten Seite mit den Riefen 32 (Fig. 6 bis 8) versehen.

Es können mehr oder minder gerichtete Riefen 32 in der Oberfläche des Belagstreifens 12 vorgesehen sein, wie dies in den Fig. 6 bis 8 angedeutet ist. Solche Riefen 32 können auf beliebige unterschiedliche Weise hergestellt werden.

Vorzugsweise sind diese Riefen 32 jeweils kürzer als der Belagstreifen 12. Die Riefen 32 gemäß Fig. 6 verlaufen im wesentlichen parallel zu einer Längserstreckung 33 des Belagstreifens 12.

Gemäß Fig. 7 sind die Riefen 32 quer zu der Längserstreckung 33 angeordnet.

Fig. 8 zeigt Riefen 32, die unter einem Winkel 34 < 90° zu der Längserstreckung 33 verlaufen.

Fig. 6 zeigt auch, daß der Belagstreifen 12 auf seiner gerieften Seite feine Fasern 35 aus seinem Stoff aufweist. Diese Fasern 35 können während der Herstellung der Riefen 32 erzeugt werden.

Vorzugsweise besteht der Belagstreifen 12 in allen zuvor erwähnten Ausführungsbeispielen aus einem hochmolekularen Polyethylen.

In allen Zeichnungsfiguren sind gleiche Teile mit gleichen Bezugszahlen versehen.

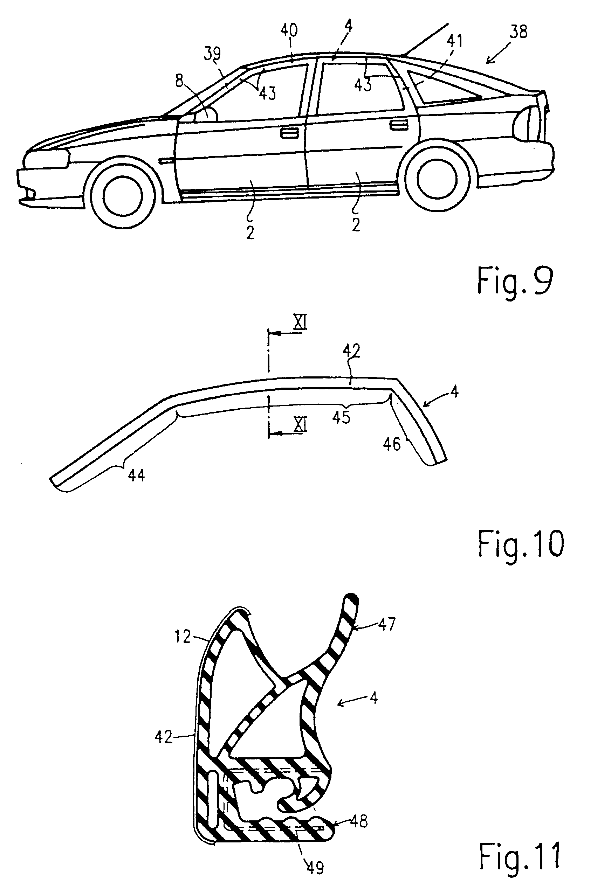

Fig. 9 zeigt ein Kraftfahrzeug 38, dessen A-Säulen 39, Dachrahmen 40 und C-Säulen 41 auf jeder Seite des Kraftfahrzeugs 38 mit einer durchgehenden Dichtungsanordnung 4 (Fig. 10) versehen sind. Mit einer Außenseite 42 (Fig. 10 und 11) jeder Dichtungsanordnung 4 wirken aus lackiertem Blech bestehende Innenflächen von Fensterrahmen 43 der Türen 2, 2 dichtend zusammen, wenn die Türen 2 geschlossen sind.

Fig. 10 verdeutlicht, daß die Dichtungsanordnung 4 einen ersten Bereich 44 an der A-Säule 39, einen zweiten Bereich 45 an dem Dachrahmen 40 und einen dritten Bereich 46 an der C-Säule aufweist.

Gemäß Fig. 11 weist die Dichtungsanordnung ein Dichtungsprofil 47 auf, dessen Außenseite 42 den Belagstreifen 12 trägt. Der Belagstreifen 12 ist auch hier übertrieben dick dargestellt und kann in jeder hierin offenbarten Art und Weise ausgebildet sein. Bestandteil der Dichtungsanordnung 4 gemäß Fig. 11 ist auch ein Klemmprofil 48, das in an sich bekannter Weise mit U-förmigem Querschnitt ausgebildet und mit einer metallischen Armierung 49 versehen ist. Die Dichtungsanordnung 4 wird mit dem Klemmprofil 48 auf einen Karosserieflansch aufgesteckt, der sich entlang der A-Säule 39, des Dachrahmens 40 und der C-Säule 41 erstreckt.

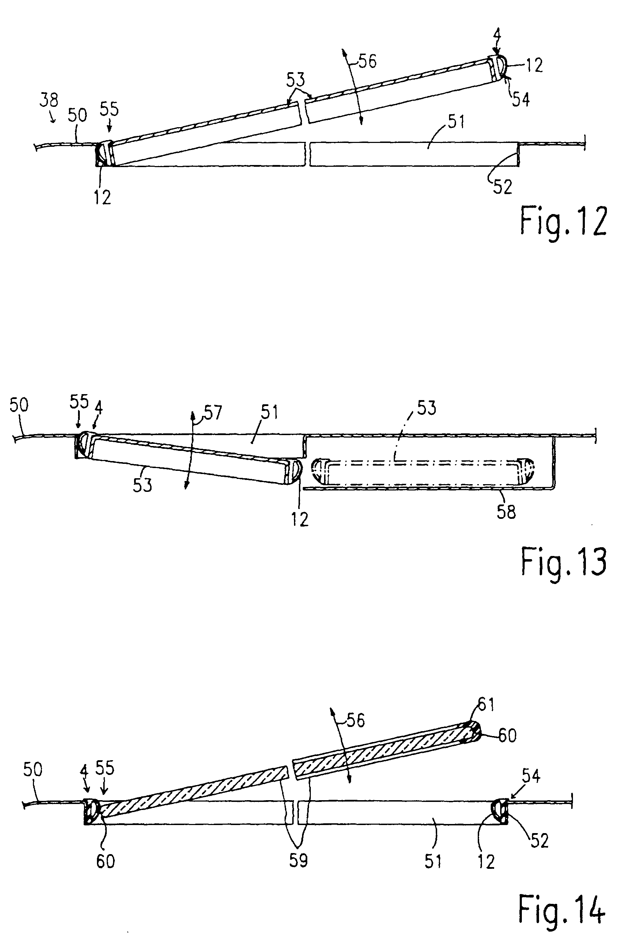

Fig. 12 zeigt einen Ausschnitt aus einem Dach 50 des Kraftfahrzeugs 38. In dem Dach 50 ist eine Öffnung 51 ausgebildet, deren Rand 52 aus lackiertem Blech besteht. Die Öffnung 51 kann durch ein hier als Schiebedach ausgebildetes Verschlußorgan 53 mit Hilfe der Dichtungsanordnung 4 dicht verschlossen werden. Die Dichtungsanordnung 4 weist ein Dichtungsprofil 54 auf, das entlang des Umfangs des Verschlußorgans 53 befestigt, z.B. aufgeklebt ist. An seiner mit dem Rand 52 zusammenwirkenden Außenfläche ist das Dichtungsprofil 54 wiederum mit dem Belagstreifen 12 versehen, der in Fig. 12 vereinfachend nur als verdickter Linienzug dargestellt ist.

Fig. 12 zeigt das Verschlußorgan 53 in der sogenannten Lüftungsstellung, in der eine Vorderkante 55 des Verschlußorgans 53 mit ihrem Teil des umlaufenden Dichtungsprofils 54 weiterhin in Dichtberührung an dem gegenüberliegenden Teil des Randes 52 anliegt. Diese Vorderkante 55 stellt gewissermaßen eine waagerechte Achse dar, um die das Verschlußorgan 53 aus der geschlossenen Stellung oder der Lüftungsstellung in den Richtungen eines Doppelpfeils 56 hochgeschwenkt oder herabgeschwenkt werden kann. Bei diesen Schwenkbewegungen können beim Stand der Technik unerwünschte Geräusche, insbesondere Knarr- oder Quietschgeräusche, auftreten. Dies ist auf Relativbewegung zwischen dem Dichtungsprofil und dem Rand der Dachöffnung zurückzuführen. Diese Neigung zur Geräuschbildung wird durch die Aufbringung des mit Riefen 32 (Fig. 6 bis 8) versehenen Belagstreifens 12 stark gemindert oder völlig unterdrückt.

Fig. 13 zeigt das Verschlußorgan 53 gemäß Fig. 12 in einer anderen Betriebsstellung. Hier ist das Verschlußorgan 53 aus der Lüftungsstellung gemäß Fig. 12 oder aus der die Öffnung 51 voll verschließenden Stellung um die Vorderkante 55 in der einen Richtung eines Doppelpfeils 57 nach unten geschwenkt worden. Auch bei diesem Schwenkvorgang oder bei dem entgegengesetzten Schwenkvorgang entsprechend der anderen Richtung des Doppelpfeils 57 kann es zu unerwünschten Geräuschen der zuvor beschriebenen Art kommen, die aber wiederum durch den Belagstreifen 12 beherrscht werden.

Aus der in Fig. 13 mit voll ausgezogenen Linien dargestellten unteren Schwenkstellung des Verschlußorgans 53 kann das Verschlußorgan 53 in die die Öffnung 51 völlig freigebende, strichpunktierte Stellung in einer Kassette 58 des Daches 50 eingefahren werden.

Fig. 14 zeigt ein als Ausstelldach ausgebildetes Verschlußorgan 59.
Das Verschlußorgan 59 läßt sich in den Richtungen des Doppelpfeils 56 um seine Vorderkante 55 lediglich aus der die Öffnung 51 verschließenden, waagerechten Stellung in die in Fig. 14 Lüftungsstellung schwenken und umgekehrt. In Fig. 14 sind zwei Ausführungsbeispiele für das Verschlußorgan 59 gleichzeitig dargestellt. Links in Fig. 14 ist das Verschlußorgan 59 als Glasscheibe mit gerundetem Rand 60 ausgebildet. Auf der rechten Seite der Fig. 14 ist der Rand 60 mit einer Randeinfassung 61 aus Polyurethan umspritzt.

Entweder der Rand 60 oder die Randeinfassung 61 wirken abdichtend mit dem Dichtungsprofil 54 der Dichtungsanordnung 4 zusammen. Das Dichtungsprofil 54 ist in diesem Fall im Rand 52 der Öffnung 51 befestigt, z.B. eingeklebt. An seiner inneren, mit dem Rand 60 oder Randeinfassung 61 zusammenwirkenden Fläche trägt das Dichtungsprofil 54 den vorerwähnten Belagstreifen 12 mit Riefen 32 (Fig. 6 bis 8). Auch hier bewirkt der Belagstreifen 12, daß bei Relativbewegungen während des Schwenkens des Verschlußorgans 59 Geräusche entweder stark gemindert werden oder überhaupt nicht mehr auftreten.

## Patentansprüche

1. Dichtungsanordnung (4;6;7)
für eine relativ zu einer Kraftfahrzeugtür (2) bewegbare Fensterscheibe (3)
oder für ein relativ zu einem Rand (52) einer Öffnung (51) einer Kraftfahrzeugkarosserie bewegbares Verschlußorgan (2;53;59) für die Öffnung (51),
mit wenigstens einem Dichtungsprofil (9,10;24;31;47;54), an dessen mit der Fensterscheibe (3) oder mit einer Dichtfläche der Öffnung (51) oder des Verschlußorgans (2;53;59) in Berührung tretendem Bereich ein Belagstreifen (12) befestigt ist,
wobei der Belagstreifen (12) aus einem thermoplastischen Kunststoff besteht und auf seiner der Fensterscheibe (3) oder der Dichtfläche zugewandten Seite mit einer Vertiefungen aufweisenden Profilierung (13) versehen ist,
**dadurch gekennzeichnet, daß** die Vertiefungen als in einer Richtung und parallel zueinander verlaufende Riefen (32) ausgebildet sind,
und daß der Belagstreifen (12) aus hochmolekularem Polyethylen besteht.

2. Dichtungsanordnung nach Anspruch 1,
**dadurch gekennzeichnet, daß** Riefen (32) in ihrer Verlaufsrichtung in einem Abstand voneinander angeordnet sind.

3. Dichtungsanordnung nach Anspruch 1 oder 2,
**dadurch gekennzeichnet, daß** die Riefen (32) parallel zu einer Längserstreckung (33) des Belagstreifens (12) verlaufen.

4. Dichtungsanordnung nach Anspruch 1 oder 2,
**dadurch gekennzeichnet, daß** die Riefen (32) quer zu einer Längserstreckung (33) des Belagstreifens (12) verlaufen.

5. Dichtungsanordnung nach Anspruch 1 oder 2,
**dadurch gekennzeichnet, daß** die Riefen (32) unter einem Winkel (34) < 90° zu einer Längserstreckung (33) des Belagstreifens (12) verlaufen.

6. Dichtungsanordnung nach einem der Ansprüche 1 bis 5,
dadurch gekennnzeichnet, daß der Belagstreifen (12) auf seiner profilierten (13) Seite feine Fasern (35) aus seinem Stoff aufweist.

## Claims

1. Sealing arrangement (4; 6; 7) for a window glass (3) moveable relative to a motor vehicle door (2)
or for a closure member (2; 53; 59) for an aperture (51) in the bodywork of a motor vehicle where the closure member is moveable relative to an edge (52) of the aperture (51),
comprising at least one sealing profile (9, 10; 24; 31; 47; 54) against whose region which is arranged to come into contact with the window glass (3) or with a sealing surface of the aperture (51) or of the closure member (2; 53; 59) there is fixed a cover strip (12),
wherein the cover strip (12) is of a thermoplastic plastics material and is provided on its side which faces the window glass (3) or the sealing surface with a profiling (13) having indentations,
**characterised in that** the indentations are in the form of grooves (32) extending in one direction and parallel to one another,
and the cover strip (12) is of high molecular weight polyethylene.

2. Sealing arrangement according to claim 1,
**characterised in that** the grooves (32) are arranged spaced from one another in their direction of alignment.

3. Sealing arrangement according to claim 1 or 2,
**characterised in that** the grooves (32) extend parallel to a lengthwise direction (33) of the cover strip (12).

4. Sealing arrangement according to claim 1 or 2,
**characterised in that** the grooves (32) extend transversely to a lengthwise direction (33) of the cover strip (12).

5. Sealing arrangement according to claim 1 or 2,
**characterised in that** the grooves (32) extend at an angle (34) of less than 90° to a lengthwise direction (33) of the cover strip (12).

6. Sealing arrangement according to one of claims 1 to 5,
**characterised in that** the cover strip (12) comprises fine fibres (35) of its own material on its profiled side (13).

## Revendications

1. Dispositif d'étanchéité (4; 6; 7) pour une vitre mobile (3) relatif à une porte de véhicule à moteur (2)
ou pour un organe mobile (2; 53; 59), relatif à un bord (52) d'une ouverture (51) d'une carrosserie de véhicule à moteur (2; 53; 59), pour la fermeture de l'ouverture (51),
comportant au moins un profilé d'étanchéité (9, 10; 24; 31; 47; 54), ayant une zone venant en contact avec la vitre (3) ou avec une surface d'étanchéité de l'ouverture (51) ou de l'organe de fermeture (2; 53; 59), dans laquelle est fixée une bande de garniture (12),
la bande de garniture (12) étant en matière synthétique thermoplastique et étant pourvue, sur sa face tournée vers la vitre (3) ou la surface d'étanchéité, d'un profilage (13) présentant des creux,
**caractérisé en ce que** les creux ont la forme de rainures (32) disposées dans une direction et parallèles les uns aux autres,
et **en ce que** la bande de garniture (12) est en polyéthylène de poids moléculaire élevé.

2. Dispositif d'étanchéité selon la revendication 1,
**caractérisé en ce que** des rainures (32) sont disposées à distance l'une de l'autre dans la direction de leur tracé.

3. Dispositif d'étanchéité selon la revendication 1 ou 2,
**caractérisé en ce que** les rainures (32) sont parallèles à une extension longitudinale (33) de la bande de garniture (12).

4. Dispositif d'étanchéité selon la revendication 1 ou 2,
**caractérisé en ce que** les rainures (32) sont perpendiculaires à une extension longitudinale (33) de la bande de garniture (12).

5. Dispositif d'étanchéité selon la revendication 1 ou 2,
**caractérisé en ce que** les rainures (32) font un angle (34) inférieur à 90° avec une extension longitudinale (33) de la bande de garniture (12).

6. Dispositif d'étanchéité selon la revendication 1 à 5,
**caractérisé en ce que** la bande de garniture (12) comporte sur sa face profilée (13) de fines fibres (35) de sa matière.
